Europäisches Patentamt

European Patent Office

Office européen des brevets

(11) Veröffentlichungsnummer: **0 048 407**

A1

(12) **EUROPÄISCHE PATENTANMELDUNG**

(21) Anmeldenummer: 81107155.4

(22) Anmeldetag: 10.09.81

(51) Int. Cl.³: **H 01 S 3/097**
**H 01 S 3/03, H 01 S 3/045**

(30) Priorität: 22.09.80 DE 3035730

(43) Veröffentlichungstag der Anmeldung:
31.03.82 Patentblatt 82/13

(84) Benannte Vertragsstaaten:
AT BE CH DE FR GB IT LI NL SE

(71) Anmelder: KRAFTWERK UNION
AKTIENGESELLSCHAFT
Wiesenstrasse 35
D-4330 Mülheim (Ruhr)(DE)

(72) Erfinder: Cirkel, Hans-Jürgen, Dr.
Anderlohrstrasse 9
D-8520 Erlangen(DE)

(72) Erfinder: Müller, Reinhard
Vogelherd 97
D-8520 Erlangen(DE)

(72) Erfinder: Bette, Willi
Penzoldtstrasse 5
D-8520 Erlangen(DE)

(74) Vertreter: Mehl, Ernst, Dipl.-Ing. et al,
Postfach 22 01 76
D-8000 München 22(DE)

(54) Hochenergielaser des TEA-Typs mit laser-achsparallel angeordneten Vorionisierungsstäben.

(57) Bei einem Hochenergielaser des TEA-Typs, insbesondere TEA-Excimerlaser, mit Anregung durch möglichst homogene, lichtbogenfreie Kondenstorentladung im Gasraum (1) zwischen mindestens zwei parallel zur optischen Achse des Lasers sich erstreckenden und mit Abstand einander gegenüberliegenden Elektroden (E1, E2) eines Entladungsrohres (L) ragt mindestens eine der Elektroden (E1, E2) mit einem der Stromzuführung dienenden Pilzstiel (4) und dem der Stromverteilung dienenden Pilzhut (5) in den Entladungsraum (1). Zur Vorionisierung des Entladungsraumes (1) ist zwischen oder benachbart zu den Elektroden (E1, E2) mindestens eine stabförmige Hilfselektrode (H), bestehend aus einem Innenleiter (7) und einem diesen umhüllenden Dielektrikum (8), achsparallel und mit Überschlagsabstand (a2) zu einer der Elektroden (E1, E2) angeordnet.

FIG 1

FIG 3

KRAFTWERK UNION
AKTIENGESELLSCHAFT

Unser Zeichen
VPA 80 P 9 3 5 7 E

Hochenergielaser des TEA-Typs mit laser-achsparallel angeordneten Vorionisierungsstäben

Die Erfindung bezieht sich auf einen Hochenergielaser des TEA-Typs gemäß Oberbegriff des Anspruchs 1.

In der älteren Anmeldung P 29 32 781.9 vom 13.08.1979 (1) ist bereits ein Anregungssystem für schnelle gepulste Entladung, insbesondere ein Hochenergielaser des TEA-Typs, vorgeschlagen worden, der sich durch eine sehr geringe Eigeninduktivität bei hoher Schaltkapazität auszeichnet. Die Form der Laserelektroden ist jedoch allenfalls als angenähert pilzförmig zu bezeichnen. Im Querschnitt pilzförmige Laserelektroden sind bekannt durch die Zeitschrift "Electronics Letters", 25. März 1971, Band 7, Seiten 141, 142 (2), ferner durch die Zeitschrift "Applied Physics Letters", Band 29 vom 01.12.1976, Seiten 707 bis 709 (3). Es ist auch aus (2) bekannt, den Laserelektroden ein sogenanntes Rogowski-Profil zu geben, um eine verbesserte Feldverteilung und Entladungshomogenität zu erzielen. Dem gleichen Zweck dient das sogenannte Chang-Profil, vgl. Zeitschrift "The Review of Scientific Instruments", Band 44, vom April 1973, Seiten 405 bis 407 (4).

Die vorliegende Erfindung befaßt sich auch mit dem Problem, bei TEA-Lasern einen möglichst großen und homogenen Entladungsquerschnitt senkrecht zur optischen Achse und zu der Längsrichtung der Elektroden zu erzielen. Dies soll durch eine geeignete Formgebung der Elektroden und durch den Einsatz einer effektiven Vorionisierungseinheit geschehen. Wie festgestellt wurde, tendiert bei den bekannten TEA-Excimer-Lasern die Entladung immer noch dazu, in mehrere Einzelbereiche aufgespalten zu werden, wenn auch die Laserelektroden mit pilzförmigem Querschnitt schon eine Verbesserung gebracht haben. Der Erfindung liegt die Aufgabe zugrunde, die bekannten TEA-Laser, insbesondere TEA-Excimer-Laser, im bezug auf einen möglichst großen und homogenen Entladungsquerschnitt noch weiter zu verbessern. Dem kommt deshalb besondere Bedeutung zu, weil sich der Einsatzschwerpunkt der TEA-Laser mehr und mehr in den industriellen Bereich verlagert und so Fragen der Wirtschaftlichkeit und damit des Wirkungsgrades und der optischen Energie eines Einzelimpulses immer stärker in den Vordergrund treten.

Erfindungsgemäß wird die gestellte Aufgabe bei einem Hochenergielaser der eingangs genannten Art durch die im Kennzeichen des Anspruchs 1 angegebenen Merkmale gelöst. Vorteilhafte Weiterbildungen sind in den Unteransprüchen beschrieben. Die mit der Erfindung erzielbaren Vorteile sind vor allem darin zu sehen, daß durch die laserachsparallele Ausrichtung von Pilzhut, Pilzstiel und der stabförmigen Hilfselektrode sich eine sehr gleichmäßige Vorionisierung und damit auch Hauptentladung erreichen läßt, ohne daß Einzelbereichaufspaltung der Entladung auftritt.

Im folgenden wird anhand der mehrere Ausführungsbeispiele darstellenden Zeichnung die Erfindung noch näher erläutert. Es zeigt in vereinfachter, schematischer Darstellung:

Fig. 1 ein Laserrohr im Querschnitt mit zwei, je ein Vorionisierungs-Hilfselektrodenpaar aufweisenden, einander spiegelsymmetrisch gegenüberliegenden pilzförmigen Laserelektroden;

Fig. 2 eine Variante für die Laserelektrodenausführung mit aus Lochblech bestehendem Netzelektroden-Pilzhut;

Fig. 3 eine stabförmige Hilfselektrode im Querschnitt;

Fig. 4 eine Impulsschaltung zur Erzeugung der Vorionisierungs- und Hauptentladungs-Impulse in Form einer Blümlein-Schaltung, und

Fig. 5 eine Impulsschaltung in Form einer Charge-Transfer-Schaltung zur Erzeugung der Zündimpulse.

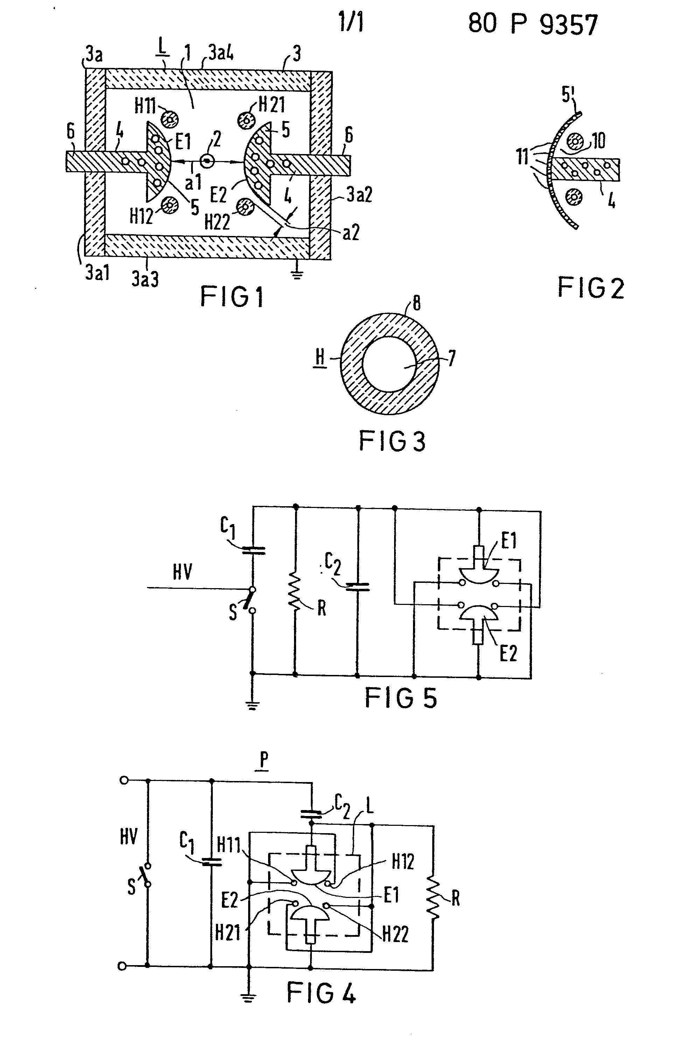

Der in Fig. 1 dargestellte Hochenergielaser des TEA-Typs
(TEA-Laser bedeutet "transversely excited atmospheric
pressure laser") ist so aufgebaut, daß im Gasraum 1 zwischen den beiden parallel zur optischen Achse 2 des Lasers sich erstreckenden und mit Abstand a1 einander gegenüberliegenden Elektroden des Laser- bzw. Entladungsrohres 3 eine möglichst homogene, lichtbogenfreie Kondensatorentladung stattfindet. Das etwa rechteckige Gehäuse 3a des als Ganzes mit L bezeichneten Lasers ist
aus Keramikwänden 3a1, 3a2, 3a3 und 3a4, die vorzugsweise aus einer hochreinen $Al_2O_3$-Keramik bestehen, gasdicht zusammengesetzt. Das Lasergas hat eine Zusammensetzung, wie sie z. B. in der älteren Anmeldung
P 29 32 781.9 beschrieben ist. Die Elektroden E1, E2 ragen jeweils mit einem der Stromzuführung dienenden Pilzstiel 4 und einem der Stromverteilung dienenden Pilzhut 5
in den Entladungsraum 1 und mit durch die Wände 3a1, 3a2
hindurchgeführten Anschlußfahnen 6 nach außen. Zur Vorionisierung des Entladungsraumes 1 sind zwischen den Elektroden E1, E2 stabförmige Hilfselektroden H11, H12 unmittelbar benachbart zum Pilzhut 5 der Elektrode E1 und
H21, H22 unmittelbar benachbart zum Pilzhut 5 der Elektrode E2 angeordnet. Sie weisen jeweils zu den Elektroden
einen Überschlagabstand a2 auf. Unmittelbar vor dem Zünden des Lasers findet ein Überschlag zwischen dem umhüllenden Dielektrium der Hilfselektroden H11, H12, H21, H22
und dem zugeordneten Elektroden E1 bzw. E2 statt. Das
von den Funken emittierte UV-Licht ionisiert das von den
Elektroden E1 und E2 eingeschlossene Gas. Wie ersichtlich, stehen sich die Elektroden E1, E2 mit ihren Pilzhüten 5 spiegelsymmetrisch gegenüber, und mit den Pilzhüten 5 stehen sich auch die beiden Hilfselektrodenpaare H11, H12 und H21, H22 spiegelsymmetrisch gegenüber. Diese Anordnung ist zur Erzielung eines möglichst großen und homogenen Entladungsquerschnittes besonders vorteilhaft.

Die generell mit H bezeichneten Hilfselektroden weisen gemäß Fig. 3 einen stabförmigen Innenleiter 7, z. B. aus Kupfer, auf und ein diesen Innenleiter 7 umhüllendes im Querschnitt kreisringförmiges Dielektrikum 8, vorzugsweise auch eine hochreine $BaTiO_3$-, $SrTiO_3$-, $Al_2O_3$- oder BeO-Keramik. Diese Hilfselektroden H sind an ihren Enden auf geeignete Weise an nicht dargestellten Stirnwänden der Laserkammer 3 (Fig. 1) befestigt. Die Laserelektroden E1, E2, d. h. die Pilzhüte 5 und die Pilzstiele 4, sind von vorzugsweise parallel zur optischen Achse 2 des Lasers sich erstreckenden Kühlkanälen 9 durchzogen, durch die eine geeignete Kühlflüssigkeit, z. B. Wasser, gepumpt wird. Beim Innenleiter 7 der Hilfselektroden H kann es sich auch um einen flüssigen Leiter handeln, der durch ein Umwälzsystem zur gleichzeitigen Kühlung durch das Keramikrohr 8 gepumpt wird.

Fig. 2 zeigt die Ausbildung durchbrochener Pilzhüte 5' als Netzelektroden, die hierzu aus Lochblech bestehen. Die Hilfselektroden H sind dabei innerhalb der von Pilzhut 5' und Pilzstiel 4 gebildeten Nischen 10 angeordnet. Beim Zündvorgang kann dabei die durch den Funkenüberschlag zwischen Hilfselektroden H und Pilzhut 5' erzeugte UV-Strahlung durch die Netzöffnungen 11 in den Entladungsraum zwischen den Hauptelektroden E1, E2 eindringen und diesen ionisieren.

Bei der gezündeten Gasentladung (Pumpen des Lasers) muß der Stromimpuls durch den Stiel 4 des Pilzes zur Mitte

0048407

des Pilzhutes fließen und kann sich dann erst im Hut 5 verteilen. Bevorzugt wird der Hut 5 der Elektroden E1, E2 als Chang- oder Rogowski-Profil ausgebildet, wie es aus der Literatur für Elektroden konstanter homogener Oberflächenfeldstärke bekannt ist. Die dargestellte Pilz- und Hilfselektroden-Doppelanordnung ist besonders vorteilhaft, wenn es auch grundsätzlich möglich ist, nur eine der Elektroden E1, E2 als Pilz-Elektrode auszubilden. Die Impulsschaltung nach Fig. 4 zur Erzeugung der Zünd- und Entladungsimpulse ist eine sogenannte Blümlein-Schaltung. Der Impulsgenerator P weist eine Hochspannungsversorgung HV auf, deren Spannung über einen niederinduktiven Schalter S an die erste Ladekapazität C1 gelegt werden kann. Parallel zu dieser Kapazität C1 liegt die Reihenschaltung der zweiten Ladekapazität C2 und der Laserelektrodenstrecken E1-E2, wobei zu letzterer ein hochohmiger Widerstand R parallelgeschaltet und an Erdpotential gelegt·ist, der hochohmig im Vergleich zum Widerstandswert des gezündeten Plasmas ist. Wie man sieht, liegen am Erdpotential auch die zweiten Pole des Schalters S und der Schaltkapazität C1. ferner die Laserelektrode E2 und die der gegenüberliedenden Laserelektrode zugeordneten Hilfselektroden H11, H12. Die Hilfselektroden H21, H22 sind dagegen mit der gegenüberliegenden Laserelektrode E1 leitend verbunden.

Die Charge-Transfer-Schaltung nach Fig. 5, gleiche Schaltelemente tragen gleiche Bezugszeichen, unterscheidet sich von der Schaltung nach Fig. 4 insbesondere dadurch, daß die zweite Schaltkapazität parallel zur Laserentladungsstrecke E1-E2 liegt und daß die erste Schaltkapazität C1 in Reihe zum niederinduktiven Schalter S und damit der Hochspannungsversorgung geschaltet ist.

Bei beiden Schaltungen wird durch Schließen des Hoch-

0048407

- 6 -    VPA 80 P 9 3 5 7 . E

spannungsschalters S, der eine Funkenstrecke oder ein
Thyratron sein kann, eine schlagartige Hochspannungsentladung zunächst über die Hilfselektroden und dann
über die Laserelektroden ausgelöst, dessen Impulsdauer,
-Höhe und Phasenlage sich aus den induktiven, kapazitiven und ohmschen Werten der Schaltelemente sowie Zuleitungen ergeben.

5 Figuren
9 Patentansprüche

Patentansprüche

1. Hochenergielaser des TEA-Typs, insbesondere TEA-Excimer-
laser, mit Anregung durch möglichst homogene, lichtbogenfreie Kondensatorentladung im Gasraum zwischen mindestens
zwei parallel zur optischen Achse des Lasers sich erstreckenden und mit Abstand einander gegenüberliegenden
Elektroden eines Entladungsrohres, von denen mindestens
eine von pilzförmigem Querschnitt ist, d a d u r c h
g e k e n n z e i c h n e t ,   daß mindestens eine der
Elektroden (E1, E2) mit einem der Stromzuführung dienenden Pilzstiel (4) und dem der Stromverteilung dienenden
Pilzhut (5) in den Entladungsraum (1) ragt und daß zur
Vorionisierung des Entladungsraumes (1) zwischen oder benachbart zu den Elektroden (E1, E2) mindestens eine stabförmige Hilfselektrode (H), bestehend aus einem Innenleiter (7) und einen diesen umhüllenden Dielektrikum (8),
achsparallel und mit Überschlagsabstand (a2) zu einer der
Elektroden (E1, E2) angeordnet ist.

2. Laser nach Anspruch 1, wobei sich zwei pilzförmige Elektroden mit ihren Pilzhüten einander zugewandt, spiegelsymmetrisch gegenüberstehen, d a d u r c h   g e -
k e n n z e i c h n e t ,   daß jedem oder nur einem Pilzhut (5) je zwei Hilfselektroden (H) zugeordnet sind.

3. Laser nach einem der Ansprüche 1 oder 2, d a -
d u r c h   g e k e n n z e i c h n e t ,   daß die Elektroden (E1, E2) von laser-achsparallel verlaufenden Kühlkanälen (9) durchdrungen sind.

4. Laser nach einem der Ansprüche 1 bis 3, d a -
d u r c h   g e k e n n z e i c h n e t ,   daß die Pilzhüte als Netzelektroden (5') ausgeführt sind und hierzu
aus Lochblech bestehen.

5. Laser nach Anspruch 4, d a d u r c h   g e -
k e n n z e i c h n e t , daß die Hilfselektroden (H)
innerhalb der von Pilzhut (5') und Pilzstiel (4) gebildeten Nischen (10) angeordnet sind.

6. Laser nach einem der Ansprüche 1 bis 5, d a -
d u r c h   g e k e n n z e i c h n e t , daß die Innenleiter (7) der Hilfselektroden (H) zylindrisch und von
einem hohlzylindrischen Dielektrikum (8) umgeben sind.

7. Laser nach Anspruch 1 oder 2, d a d u r c h   g e -
k e n n z e i c h n e t , daß die pilzförmigen Elektroden (E1, E2) ein Chang- oder Rogowski-Profil aufweisen.

8. Laser nach Anspruch 1 oder 6, d a d u r c h   g e -
k e n n z e i c h n e t , daß das hochspannungsfeste
Dielektrikum der Hilfselektroden (H) aus hochreinem
$BaTiO_3$, $SrTiO_3$, $Al_2O_3$ oder BeO besteht.

9. Laser nach einem der Ansprüche 1 bis 8, d a -
d u r c h   g e k e n n z e i c h n e t , daß der Innenleiter (7) der Hilfselektroden bzw. Vorionisierungsstäbe jeweils innerhalb einer Blümlein- oder Charge-Transfer-Schaltung mit der ihm gegenüberliegenden Elektrode
(E1 bzw. E2) leitend verbunden ist.

FIG 1

FIG 2

FIG 3

FIG 5

FIG 4

0048407

Europäisches
Patentamt

EUROPÄISCHER RECHERCHENBERICHT

Nummer der Anmeldung
EP 81 10 7155

## EINSCHLÄGIGE DOKUMENTE

| Kategorie | Kennzeichnung des Dokuments mit Angabe. soweit erforderlich. der maßgeblichen Teile | betrifft Anspruch |
|---|---|---|
| | <u>CA - A - 1 016 641</u> (J.L. LACHABRE et al.) <br><br> * Seite 4, Zeilen 13-20; Seite 9, Zeilen 24-28; Figur 5 * <br><br> -- | 1,5,7,9 |
| A | <u>DE - A - 2 042 615</u> (MINISTER OF NATIONAL DEFENCE OF HER MAJESTY'S CANADIAN GOVERNMENT, OTTAWA, CA) <br><br> * Figuren 8,9,13 * <br><br> -- | 1,7,9 |
| DPA | <u>EP - A - 0 024 576</u> (KRAFTWERK UNION AKTIENGESELLSCHAFT, DE) <br><br> * Ansprüche 1,2,7,8; Figuren 3,10 * <br><br> & DE - A - 2 932 781 <br><br> -- | 1,7,9 |
| A | IEEE JOURNAL OF QUANTUM ELECTRO-NICS, Band 15, Nr. 9, September 1979, Seiten 60D-61D <br> New York, U.S.A. <br> K. HOHLA et al.: "UV laser operation of $F_2$ in a fast discharge device" <br><br> *Seite 60D; Figur 1 * <br><br> -- | 1,7,9 |
| A | IEEE JOURNAL OF QUANTUM ELECTRO-NICS, Band 8, Nr. 8, August 1972, Seiten 721-723 <br> New York, U.S.A. <br> T.Y. CHANG et al.: "A simple self-mode-locked atmospheric pressure $CO_2$ laser" <br><br> * Figuren 1,3; rechte Spalte, Zeilen 16-18 * <br><br> ---- | 1,2,6,7,9 |

**KLASSIFIKATION DER ANMELDUNG (Int Cl³)**

H 01 S 3/097
       3/03
       3/045

**RECHERCHIERTE SACHGEBIETE (Int Cl³)**

H 01 S 3/097
       3/03
       3/045

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie   übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 17-12-1981 | FARNESE |

EPA form 1503.1  06.78